# FASCICULE DE BREVET EUROPEEN

(11) **EP 2 404 140 B1**
(45) Date de publication et mention de la délivrance du brevet: **07.10.2015**
(21) Numéro de dépôt: 10708333.9
(22) Date de dépôt: 11.02.2010
(51) Int. Cl.: G01D 3/10, G01D 4/00

(54) **CAPTEUR D'IMPULSIONS ELECTRIQUES**
ELEKTRISCHER IMPULSSENSOR
ELECTRIC PULSE SENSOR

(30) Priorité: 06.03.2009 FR 0951404
(43) Date de publication de la demande: 11.01.2012
(73) Titulaire: SAGEMCOM ENERGY & TELECOM SAS, 92500 Rueil-Malmaison (FR)
(72) Inventeur: WEBER, Patrick, F-92500 Rueil-Malmaison (FR)
(74) Mandataire: Camus, Olivier Jean-Claude
(86) Numéro de dépôt international: PCT/FR2010/050236
(87) Numéro de publication internationale: WO 2010/100355

(56) Documents cités:
- WO-A2-02/49195
- WO-A2-03/025878
- WO-A2-2006/024854
- US-A- 4 213 119

## Description

### DOMAINE TECHNIQUE DE L'INVENTION

La présente invention concerne une unité d'acquisition de données apte à coopérer avec un dispositif de communication, l'unité comprenant :
- au moins un fil de relais d'impulsions électriques, et
- un fil de détection de coupure auquel est associé un état.

Elle concerne également un dispositif d'acquisition apte à coopérer avec l'unité d'acquisition de données.

Elle trouve une application particulière dans le domaine des compteurs d'eau, de gaz, de chaleur etc.

### ARRIERE-PLAN TECHNOLOGIQUE DE L'INVENTION

Dans le domaine des compteurs, afin de collecter à distance les informations concernant une grandeur physique telle que de l'eau, du gaz, de la chaleur etc., une unité d'acquisition de données telle qu'un capteur est reliée audit compteur et est apte à coopérer avec un dispositif de communication tel qu'un serveur distant.

Le capteur comprend :
- au moins un fil de relais d'impulsions électriques, et
- un fil de détection de coupure auquel est associé un état.

Le capteur reçoit les impulsions électriques du compteur via le fil de relais d'impulsions et envoie le comptage des impulsions électriques par voie hertzienne au serveur distant. Un tel capteur est décrit dans le document WO 2006/024854.

Un inconvénient de cet état de la technique est que si la communication par voie hertzienne ne fonctionne plus, plus aucune information n'est accessible via le capteur car il est très difficile d'avoir accès au capteur, ce dernier étant en général protégé en étant noyé dans de la résine.

### DESCRIPTION GENERALE DE L'INVENTION

La présente invention a pour but une unité d'acquisition de données apte à coopérer avec un dispositif de communication de données, l'unité comprenant :
- au moins un fil de relais d'impulsions électriques, et
- un fil de détection de coupure auquel est associé un état,
qui permette d'accéder aux données de l'unité d'acquisition de données lorsque la communication par voie hertzienne ne fonctionne plus.

Selon un premier objet de l'invention, ce but est atteint par une unité d'acquisition de données apte à coopérer avec un dispositif de communication, l'unité comprenant :
- au moins un fil de relais d'impulsions électriques apte à être positionné dans un mode de communication de données, et
- un fil de détection de coupure auquel est associé un état, caractérisée en ce qu'elle comporte une unité de contrôle apte à :
- Contrôler l'état du fil de détection de coupure ;
- Si l'état du fil de détection de coupure a été modifié, vérifier si le fil de relais d'impulsions est positionné dans un mode de communication de données selon un protocole de communication déterminé ; et
- Echanger des données au dispositif de communication selon le protocole de communication via le fil de relais d'impulsions lorsque ledit fil est positionné dans ledit mode de communication.

Comme on va le voir en détail par la suite, grâce à la modification du fil de détection de coupure, et à la vérification du mode du fil de relais, l'unité va savoir qu'elle peut établir une communication avec le dispositif de communication et échanger des données via le fil de relais selon le protocole déterminé.

Selon des modes de réalisation non limitatifs, l'unité d'acquisition de données peut comporter en outre une ou plusieurs caractéristiques supplémentaires parmi les suivantes :
- Le fil de relais d'impulsions est positionné dans un mode de communication de données selon un protocole de communication déterminé s'il reçoit un paquet de données selon ledit protocole de communication. Cela permet d'activer un échange de données selon ledit protocole de communication.
- L'unité de contrôle est en outre apte à appliquer une temporisation à la vérification du mode du fil de relais d'impulsions. Cela permet de faire la vérification pendant un temps limité et de conclure à une coupure effective du fil de détection ou non.
- L'unité de contrôle est en outre apte à envoyer une alarme de coupure si la temporisation est écoulée et que le fil de relais d'impulsions n'est pas positionné dans ledit mode de communication. Cela permet d'envoyer une alarme dans le cas où le fil de détection de coupure a été coupé physiquement sans intention d'activer une communication, donc soit par accident par exemple, soit par dégradation.
- L'unité d'acquisition de données comporte deux fils de relais d'impulsions électriques. Dans ce cas, chaque fil de relais est unidirectionnel. Un fil de relais permet d'émettre des données, tandis que l'autre fil de relais permet de recevoir des données.
- L'unité d'acquisition de données est un capteur apte à compter des impulsions électriques. Cela permet d'acquérir des données du capteur.
- L'unité d'acquisition de données est un compteur apte à acquérir des données sous la forme d'une grandeur physique. Cela permet d'acquérir des données du compteur.

Selon un deuxième objet de l'invention, elle concerne un dispositif de communication apte à coopérer avec une unité d'acquisition de données selon l'une des caractéristiques précédentes, l'unité comprenant :
- au moins un fil de relais d'impulsions apte à être positionné dans un mode de communication de données, et
- un fil de détection de coupure auquel est associé un état, caractérisé en ce qu'il comporte une unité de contrôle apte à :

- Modifier l'état du fil de détection de coupure ;
- Positionner le fil de relais d'impulsions dans un mode de communication de données selon un protocole de communication déterminé ; et
- Echanger des données avec l'unité d'acquisition de données selon le protocole de communication via le fil de relais d'impulsions lorsque ledit fil est positionné dans ledit mode de communication.

Selon des modes de réalisation non limitatifs, le dispositif de communication peut comporter en outre une ou plusieurs caractéristiques supplémentaires parmi les suivantes :
- Le positionnement du fil de relais d'impulsions dans un mode de communication de données selon un protocole de communication déterminé est effectué en envoyant un paquet de données selon ledit protocole de communication.
- Le dispositif de communication est un capteur apte à compter des impulsions électriques.
- Le dispositif de communication est un compteur apte à acquérir des données sous la forme d'une grandeur physique.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention.
- La Fig. 1 représente schématiquement un premier mode de réalisation d'une unité d'acquisition de données selon l'invention et d'un dispositif de communication selon l'invention aptes à coopérer entre eux ;
- La Fig. 2 représente l'unité d'acquisition de données de la Fig. 1 qui est un compteur avec un dispositif de communication de la Fig. 1 qui est un capteur ;
- La Fig. 3 représente l'unité d'acquisition de données de la Fig. 1 qui est un capteur, avec un dispositif de communication de la Fig. 1 qui est un compteur ; et
- La Fig. 4 est un organigramme illustrant un mode de réalisation non limitatif d'une coopération entre l'unité d'acquisition de données de la Fig. 1 et le dispositif de communication de la Fig. 1.

### DESCRIPTION DES FORMES DE REALISATION PREFEREES DE L'INVENTION

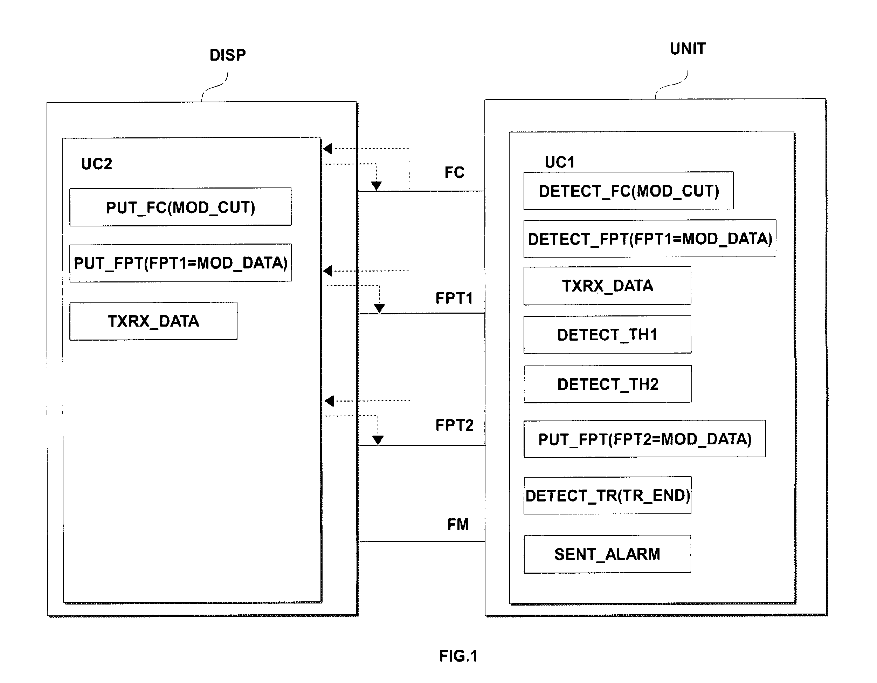

L'unité d'acquisition de données UNIT selon l'invention apte à coopérer avec un dispositif de communication, l'unité comprenant :
- au moins un fil de relais d'impulsions électriques FPT apte à être positionné dans un mode de communication de données, et
- un fil de détection de coupure FC auquel est associé un état MOD, est décrite dans un mode de réalisation non limitatif à la Fig. 1.

Elle comporte une unité de contrôle UC1 apte à :
- Contrôler l'état du fil de détection de coupure FC ;
- Si l'état du fil de détection de coupure FC a été modifié, vérifier si le fil de relais d'impulsions FPT est positionné dans un mode de communication de données selon un protocole de communication déterminé ; et
- Echanger des données avec le dispositif de communication DISP selon le protocole de communication via le fil de relais d'impulsions FPT lorsqu'il est positionné dans ledit mode de communication.

Dans un mode de réalisation non limitatif illustré à la Fig. 1, elle comporte deux fils de relais d'impulsions électriques FPT1 et FPT2.
Dans ce mode, dans une variante de réalisation non limitative, l'unité de contrôle UC1 est en outre apte à positionner le deuxième fil de relais d'impulsions électriques FPT2 en mode de communication de données.

On notera que dans un autre mode de réalisation non limitatif dans lequel l'unité d'acquisition de données UNIT ne comporte qu'un seul fil de relais d'impulsions, ce fil est bidirectionnel et permet d'échanger (émettre/recevoir) des données avec le dispositif de communication.
On notera que l'unité d'acquisition de données UNIT comporte en outre un fil de référence de potentiel FM.
L'unité UNIT est apte à coopérer avec un dispositif de communication DISP qui est décrit également dans un mode de réalisation non limitatif à la Fig. 1.

Il comporte une unité de contrôle UC2 apte à :
- Modifier l'état du fil de détection de coupure FC ;
- Positionner le fil de relais d'impulsions FPT dans un mode de communication de données selon un protocole de communication déterminé ; et
- Echanger des données de l'unité d'acquisition de données UNIT selon le protocole de communication via le fil de relais d'impulsions FPT lorsqu'il est positionné dans ledit mode de communication.

Le dispositif DISP comporte des interfaces aptes à coopérer avec le fil de coupure FC et le ou les fils de relais d'impulsions électriques FPT1, FPT2 de l'unité d'acquisition de données UNIT. Dans des exemples non limitatifs, les interfaces sont :
- Une interface RS232 aptes à coopérer avec les fils de relais d'impulsions électriques FPT1, FPT2, cette prise pouvant être connectée à un ordinateur, et
- un interrupteur ouvert à la masse apte à coopérer avec le fil de coupure FC.

Dans un premier mode de réalisation non limitatif, l'unité d'acquisition de données UNIT est un capteur CAPT apte à compter des impulsions électriques, et le dispositif de communication DISP est un équipement tiers tel qu'un équipement de diagnostic.
Un tel capteur CAPT permet d'enregistrer les consommations d'un compteur d'eau, de gaz, d'électricité, de chaleur etc. type électronique ou électromécanique sous forme d'impulsions électriques.
Dans ce mode, le capteur CAPT se comporte en « esclave » car il fonctionne de manière passive, tandis que l'équipement tiers se comporte en « maître ». L'activation du mode de communication de données (modification de l'état du fil de détection de coupure et positionnement du fil de relais dans un mode de communication de données) provient en effet de l'équipement tiers.
Dans ce mode, on va pouvoir accéder à des données capteur via l'équipement tiers. Ces données peuvent dans des exemples non limitatifs êtres une version des composants matériels ; une version du logiciel implanté dans le capteur ; un état mémoire qui informe de la quantité de mémoire interne utilisée ; un état d'alimentation ; un état de défaut qui remonte les défauts tels que dans des exemples non limitatifs, une panne de la communication par voie hertzienne, ou encore une batterie faible ; un état d'alarme ; un état de durée de vie exprimé en terme de consommation déjà effectuée sur la batterie; un état de sollicitation thermique et/ou mécanique des composants, etc.
Dans ce mode on va pouvoir également envoyer des données au capteur relatives à des commandes telles que dans des exemples non limitatifs, des commandes de mise à jour du logiciel capteur, d'activation, désactivation de fonctionnalité, calibration de fonctions internes au capteur, de modification, de suppression de données stockées dans le capteur etc.

Dans un deuxième mode de réalisation non limitatif, l'unité d'acquisition de données UNIT est un compteur COMPT apte à acquérir des données sous la forme d'une grandeur physique et le dispositif de communication DISP est un équipement tiers.
Dans des exemples non limitatifs, le compteur est un compteur d'eau, de gaz, d'électricité, de chaleur etc. type électronique ou électromécanique.
Dans ce mode, le compteur COMPT se comporte en « esclave » car il fonctionne de manière passive, tandis que l'équipement tiers se comporte en « maître ». L'activation du mode de communication de données provient en effet de l'équipement tiers.
Dans ce mode, on va pouvoir accéder à des données compteur via l'équipement tiers. Ces données sont dans des exemples non limitatifs une identification, un numéro de série, d'ordre, de production, de logiciel implanté dans le compteur ; des données de comptage, d'état, de taux d'utilisation, de panne, d'alarme ; des informations d'autres sources de données accessibles par le compteur (par exemple dans le cas d'un compteur électrique sur réseau courant porteur). Dans ce mode on va pouvoir également envoyer des données au compteur relatives à des commandes telles que dans des exemples non limitatifs, des commandes de mise à jour du logiciel compteur, d'activation, désactivation, calibration de fonctions internes au compteur, de modification, de suppression de données stockées dans le compteur etc.

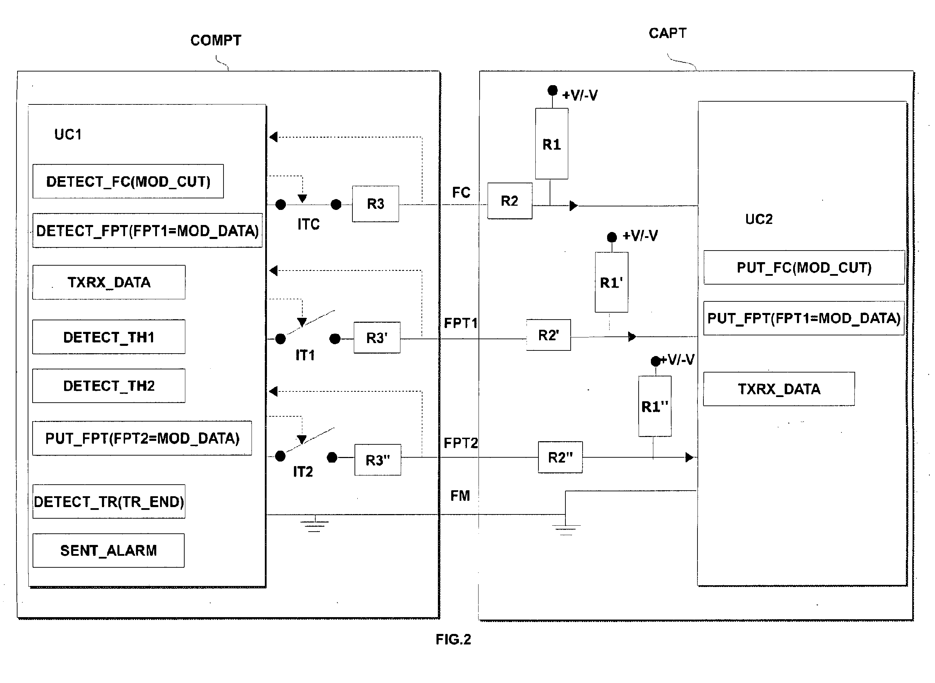

Dans un troisième mode de réalisation non limitatif, l'unité d'acquisition de données UNIT est un capteur CAPT apte à compter des impulsions électriques, et le dispositif de communication est un compteur COMPT apte à acquérir des données sous la forme d'une grandeur physique. Ce troisième mode est illustré à la Fig. 2.
Dans ce mode, le capteur CAPT se comporte en « esclave » car il fonctionne de manière passive, tandis que le compteur COMPT est « maître ». L'activation du mode de communication de données provient en effet du compteur COMPT.
Dans ce mode, on va pouvoir également accéder à des données capteur (comme dans le premier mode) via le compteur et/ou envoyer des données au capteur (comme dans le premier mode).
Dans ce mode, comme on peut le voir, dans un mode de réalisation non limitatif, le capteur CAPT comporte des résistances de tirage R1, R1', R1" (appelées en anglais « pull-up resistor ») associées respectivement au fil de détection de coupure FC, et aux deux fils de relais FPT1, FPT2 et reliées à une alimentation +V.
On notera que des résistances de protection (contre les surtensions par exemple) R2, R2', R2" sont également associées respectivement au fil de détection de coupure FC, et aux deux fils de relais FPT1, FPT2.
Dans un mode de réalisation non limitatif, le compteur COMPT quant à lui comprend des interrupteurs ITC, IT1 et IT2 associés respectivement au fil de détection de coupure FC, et aux deux fils de relais FPT1, FPT2.
Le compteur COMPT est apte ainsi à modifier l'état du fil de détection de coupure FC en ouvrant le premier interrupteur ITC qui se met alors à l'état « haut » qui est au niveau de l'alimentation +V grâce à la résistance de « pull up » R1 ou en le fermant, il se met alors à « l'état bas » qui est la masse. On notera que les résistances de « pull-up » R1' et R1" associées aux deux fils de relais FPT1 et FPT2 permettent au capteur CAPT de récupérer les impulsions électriques concernant la grandeur physique du compteur COMPT. Lorsqu'un interrupteur IT1, IT2 est ouvert, l'unité de contrôle UC1 voit le niveau du fil de relais FPT1, FPT2 associé se modifier et passer au niveau « haut » +V par exemple, tandis que lorsqu'un interrupteur IT1, IT2 est fermé, l'unité de contrôle UC1 voit le niveau du fil de relais associé FPT1, FPT2 se modifier et passer au niveau « bas » à la masse par exemple. Les interrupteurs IT1 et IT2 s'ouvrent en fonction du flux de la grandeur physique acquise par le compteur COMPT. Ainsi, l'ouverture d'un interrupteur IT1, IT2 permet de comptabiliser le nombre d'impulsions électriques relatif à la grandeur physique acquise.
Dans ce mode, dans un mode de réalisation non limitatif, l'unité de contrôle UC1 est en outre apte à modifier l'alimentation +V d'une résistance de « pull-up » de telle sorte qu'elle soit négative -V. Ainsi, en mode « esclave », l'unité de contrôle UC1 va pouvoir modifier l'état du fil de détection de coupure FC en changeant l'alimentation de sens et informer l'unité de contrôle UC2 d'une volonté de revenir dans un mode standard de comptage d'impulsions électriques pour le capteur CAPT.
Dans ce mode, dans un mode de réalisation non limitatif, l'unité de contrôle UC2 est apte à refermer l'interrupteur ITC et revenir dans un mode standard de comptage d'impulsions électriques pour le capteur CAPT.

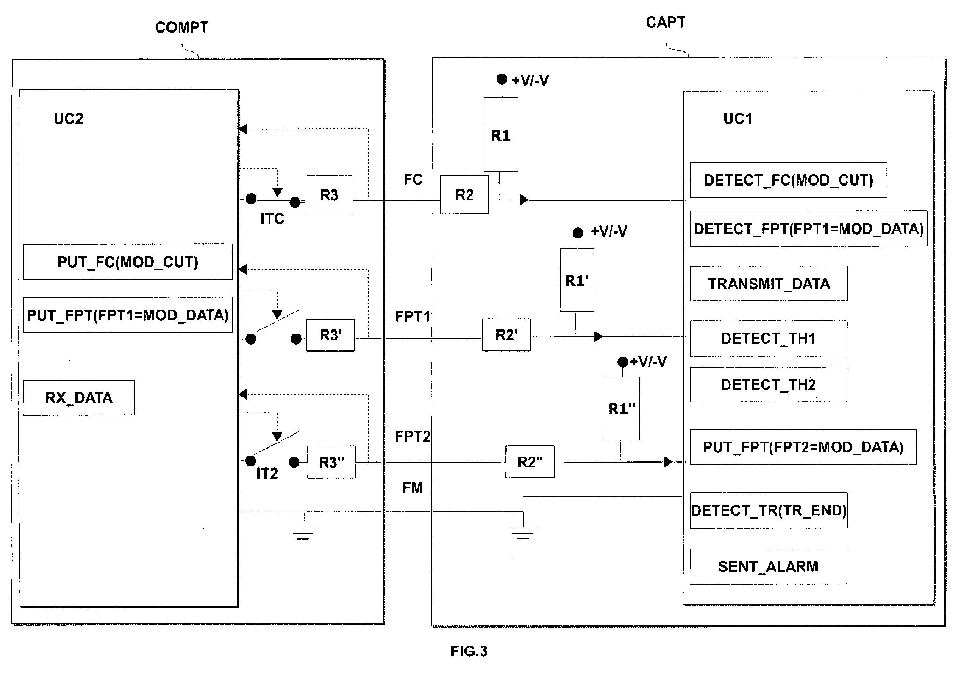

Dans un quatrième mode de réalisation non limitatif, l'unité d'acquisition de données UNIT est un compteur COMPT apte à acquérir des données sous la forme d'une grandeur physique et le dispositif de communication DISP est un capteur CAPT apte à compter des impulsions électriques. Ce quatrième mode est illustré à la Fig. 3.
Dans ce mode, le capteur CAPT se comporte en « maître » car c'est lui qui initie l'activation du mode de communication de données, tandis que le compteur COMPT est « esclave », il fonctionne de manière passive.
Dans ce mode, on va pouvoir accéder à des données compteur (comme dans le deuxième mode) via le capteur et/ou également envoyer des données au compteur (comme dans le deuxième mode).
On notera que dans ce mode l'architecture (résistances de « pull-up ») du capteur CAPT est la même que celle décrite ci-dessus dans le troisième mode de réalisation.
Dans ce mode également, dans un mode de réalisation non limitatif, l'unité de contrôle UC2 est en outre apte à modifier l'alimentation +V d'une résistance de « pull-up » de telle sorte qu'elle soit négative -V. Ainsi, en mode « maître », l'unité de contrôle UC2 va pouvoir modifier l'état du fil de détection de coupure FC en changeant l'alimentation de sens. Celle-ci est détectée par l'unité de contrôle UC1 et permet de passer dans le mode de communication.

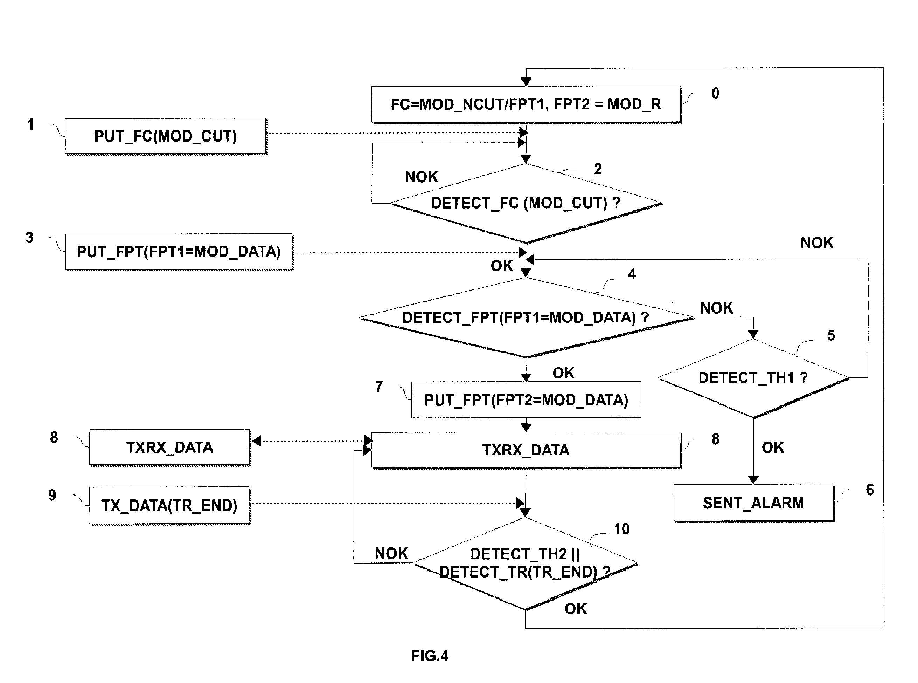

L'unité d'acquisition de données UNIT et le dispositif de communication DISP coopèrent entre eux de la manière suivante telle qu'illustrée sur la Fig. 4 dans un mode de réalisation non limitatif.
On notera que selon ce mode de réalisation non limitatif, on prend l'exemple où l'unité d'acquisition de données UNIT comporte deux fils de relais d'impulsions FPT1 et FPT2. Dans ce mode, dans un exemple non limitatif, lorsque l'unité d'acquisition de données UNIT est utilisée de manière standard, le premier fil de relais d'impulsions FPT1 est utilisé pour relayer les impulsions électriques relatives au débit d'eau, tandis que le deuxième fil de relais d'impulsions est utilisé pour FPT2 pour relayer les impulsions électriques relatives au sens du débit d'eau.

On notera que l'unité d'acquisition de données UNIT se trouve dans un état initial 0) appelé mode compteur dans lequel :
- Le fil de détection de coupure est dans un état MOD_NCUT représentatif d'une non coupure ; et
- Les fils de relais d'impulsions FPT1 et FPT2 sont dans un mode de relais d'impulsions électriques MOD_R.
**Dans une première étape 1),** le dispositif de communication DISP modifie l'état du fil de détection de coupure FC (étape PUT_FC(MOD CUT)).
Dans un premier mode de réalisation non limitatif, la modification de l'état du fil de détection de coupure FC s'effectue au niveau logique électrique.

On notera que dans un deuxième mode de réalisation non limitatif, la modification de l'état du fil de détection de coupure FC peut se faire également au niveau physique. Dans ce mode, cela signifie que soit le fils de détection de coupure FC a été coupé involontairement ou volontairement en raison d'une dégradation par exemple, soit volontairement, par exemple lorsque le dispositif de communication DISP est un équipement tiers.

**Dans une deuxième étape 2),** l'unité d'acquisition de données UNIT contrôle l'état du fil de détection de coupure FC (étape DETECT_FC(MOD_CUT).
On notera que le contrôle s'effectue soit de façon continue, soit de façon périodique.
On notera que cette étape est indépendante de la première étape et peut donc s'effectuer avant, après ou en parallèle de celle-ci.

**Dans une troisième étape 3),** le dispositif de communication DISP positionne le fil de relais d'impulsions FPT1 dans un mode de communication de données selon un protocole de communication déterminé (étape PUT_FPT(FPT1=MOD_DATA)).
Dans un mode de réalisation non limitatif, le positionnement du fil de relais FPT1 dans un mode de communication de données selon un protocole de communication déterminé est effectué en envoyant un paquet de données TR selon ledit protocole de communication.
Dans un exemple non limitatif, le protocole de communication utilisé est le protocole RS232 qui est un protocole de communication série.
Selon ce protocole, les données sont envoyées en série par paquet de données TR, un paquet étant composé :
- d'un bit de départ,
- de 7 à 8 bit de données,
- d'un bit de parité optionnel
- et d'un bit d'arrêt.
Le bit de départ à un niveau logique "0" tandis que le bit d'arrêt est de niveau logique "1". Le bit de donnée de poids faible est envoyé en premier suivi des autres.
Le protocole n'est pas décrit plus en détail car il est connu de l'homme du métier.
Ainsi, le dispositif de communication DISP envoie un paquet de données TR selon le protocole RS232 sur le fils de relais d'impulsions FPT1.
On notera que les données échangées sont sous forme numériques.

L'activation d'une communication est ainsi établie avec l'unité d'acquisition de données UNIT.

On notera que cette troisième étape est indépendante de la deuxième étape et peut donc s'effectuer avant, après ou en parallèle de celle-ci.

**Dans une quatrième étape 4),** si l'état du fil de détection de coupure FC a été modifié, l'unité d'acquisition de données UNIT vérifie si le fil de relais d'impulsions FPT1 est positionné dans un mode de communication de données selon un protocole de communication déterminé, dans l'exemple le protocole RS232 (étape DETECT_FPT(FPT1=MOD_DATA)).
Dans un mode de réalisation non limitatif, le fil de relais FPT1 est positionné dans un mode de communication de données MOD_DATA selon un protocole de communication déterminé s'il reçoit un paquet de données TR selon ledit protocole de communication comme décrit précédemment.
Ainsi l'unité UNIT vérifie si elle reçoit un paquet de données TR sur ledit fil de relais FPT1.

Dans un mode de réalisation non limitatif, l'unité de contrôle UC1 est apte à appliquer une temporisation TH1 à la vérification du mode du fil de relais d'impulsions FPT1. Cela permet de faire une vérification pendant un temps limité et d'être sûr que la coupure du fil de détection FC est bien due à l'activation d'une communication avec ladite unité UNIT et non pas due à une dégradation du fil ou à un arrachage intempestif par exemple.

**Ainsi, dans une cinquième étape 5),** si le fil de relais d'impulsions FPT1 n'est pas positionné dans ledit mode de communication de données, l'unité d'acquisition de données UNIT vérifie si la temporisation TH1 est écoulée (est supérieure à un intervalle de temps déterminé de 100ms dans un exemple non limitatif) (étape DETECT_TH1).
Si c'est le cas, alors **dans une sixième étape 6),** l'unité d'acquisition de données UNIT envoie une alarme de coupure (étape SENT_ALARM). Sinon, on retourne à l'étape 4).

**Dans une septième étape 7),** si le fil de relais d'impulsions FPT1 est positionné dans le mode de communication de données, l'unité d'acquisition de données UNIT positionne le deuxième fil de relais d'impulsions FPT2 en mode de communication de données (PUT_FPT(FPT2=MOD_DATA).
A cet effet, elle envoie un paquet de données TR au dispositif de communication DISP via le fils de relais d'impulsions FPT2 selon le protocole donné ou via le fil de relais FPT1 si le protocole est monofilaire. L'unité d'acquisition de données UNIT se trouve maintenant dans un mode échange de données qui est différent du mode compteur de l'état initial 0).

**Dans une huitième étape 8),** l'unité d'acquisition de données UNIT échange des données avec le dispositif de communication DISP selon le protocole de communication via les fils de relais d'impulsions FPT1, FPT2 lorsque lesdits fils sont positionnés dans ledit mode de communication.

En particulier, l'unité d'acquisition de données UNIT envoie des données selon le protocole RS232 sur le deuxième fils de relais d'impulsions électriques FPT2 (étape TXRX_DATA).
Le dispositif de communication DISP reçoit ainsi des données de l'unité d'acquisition de données UNIT selon le protocole de communication via le fil de relais FPT2 lorsque le fil de relais d'impulsions est positionné dans ledit mode de communication.

Ainsi, le dispositif DISP va pouvoir avoir accès à des données de l'unité d'acquisition UNIT différentes des impulsions électriques.
Il va pouvoir également émettre des données en direction de l'unité d'acquisition de données UNIT via le premier fil de relais FPT1 (étape TXRX_DATA).

Afin de terminer l'échange de données, **dans une neuvième étape 9),** le dispositif de communication DISP envoie un paquet de données de fin de communication TR_END (étape TX_DATA(TR_END)).

**Dans une dixième étape 10),** l'unité d'acquisition de données UNIT vérifie si un paquet de donnée de fin de communication TR_END a été reçu sur le fil de relais FPT1 selon le protocole de communication de données.
Si c'est le cas, l'unité d'acquisition de données UNIT revient en mode compteur (état initial 0)).
A cet effet, l'unité d'acquisition de données UNIT :
- d'une part, modifie l'état du fil de détection de coupure FC de manière à ce qu'il corresponde à un état « non coupé. » MOD_NCUT, et
- d'autre part, positionne les fils de relais FPT1 et FPT2 dans un mode de relais d'impulsions électriques MOD_R en libérant le contrôle du potentiel des fils de relais FPT1 et FPT2.

Bien entendu la description de l'invention n'est pas limitée à l'application, aux modes de réalisation et aux exemples décrits ci-dessus.

Ainsi, l'invention peut s'appliquer à une unité d'acquisition de données UNIT qui comprend un unique fil de relais d'impulsions. Dans ce cas, ce fil est bidirectionnel et est utilisé pour l'envoi ou la réception de données selon le protocole de communication déterminé, et le mode de communication associé au fil de relais d'impulsions est un mode bidirectionnel.

Par ailleurs, dans un mode de réalisation non limitatif, l'unité de contrôle UC1 de l'unité d'acquisition de données UNIT est en outre apte à appliquer une temporisation TH2 à l'échange de données entre l'unité d'acquisition de données UNIT et le dispositif de communication DISP. Cela permet de ne pas laisser les fils de relais FPT1 et FPT2 en mode de communication de données indéfiniment après la fin de la communication entre l'unité UNIT et le dispositif DISP dans le cas par exemple où aucun paquet de fin de communication de données TR_END n'a été reçu. Ainsi, **dans une dixième étape 10)** illustrée à la Fig. 4, l'unité d'acquisition de données UNIT vérifie si la temporisation TH2 est écoulée (est supérieure à un intervalle de temps déterminé de 100ms dans un exemple non limitatif) (étape DETECT_TH2). Si c'est le cas, l'unité d'acquisition de données UNIT revient en mode compteur (état initial 0)).
On peut bien entendu associer ce mode de réalisation avec la vérification d'une réception de paquet de données de fin de communication TR_END.

Ainsi, l'invention décrite présente notamment les avantages suivants :
- Elle permet d'établir une communication pour envoyer des données numériques entre un capteur et un compteur, ou entre un équipement tiers et un capteur/compteur grâce à deux fonctions simples :
   - d'une part grâce au contrôle de l'état du fil de coupure qui indique qu'un dispositif de communication veut entrer en communication avec le capteur/compteur ; et
   - d'autre part grâce à la vérification du positionnement d'un fil de relais en mode de communication de données selon un protocole déterminé, qui indique de quelle manière (selon quel protocole) le dispositif de communication veut communiquer avec le capteur/compteur.
- Elle est simple à mettre en oeuvre : il suffit en particulier d'avoir des résistances de « pull-up » et de les commander/contrôler via une unité de contrôle UC ;
- Elle permet de faire des analyses détaillées du capteur ou du compteur grâce à l'accès aux données normalement non accessibles ;
- Elle ne nécessite aucun ajout de fils supplémentaires sur le capteur ou le compteur puisqu'elle utilise des fils déjà existants. Elle peut donc être adaptée facilement à d'anciens modèles de capteur/compteur ; et
- Elle n'interfère pas avec les fonctionnalités principales du compteur (envoi des impulsions électriques) ou du capteur (réception des impulsions électriques) puisqu'elle se fait lorsque le fils de détection de coupure est coupé (dans ce cas, l'unité de contrôle UC du capteur ne regarde pas le niveau des fils de relais).

## Revendications

1. Unité d'acquisition de données (UNIT) apte à coopérer avec un dispositif de communication (DISP), l'unité comprenant :
- au moins un fil de relais d'impulsions électriques (FPT) apte à être positionné dans un mode de communication de données, et
- un fil de détection de coupure (FC) auquel est associé un état, **caractérisée en ce qu'**elle comporte une unité de contrôle (UC1) apte à :
- Contrôler l'état du fil de détection de coupure (FC) ;
- Si l'état du fil de détection de coupure (FC) a été modifié, vérifier si le fil de relais d'impulsions (FPT) est positionné dans un mode de communication de données selon un protocole de communication déterminé ; et
- Echanger des données avec le dispositif de communication (DSP) selon le protocole de communication via le fil de relais d'impulsions (FPT) lorsque ledit fil est positionné dans ledit mode de communication.

2. Unité d'acquisition de données (UNIT) selon la revendication 1, **caractérisée en ce que** le fil de relais d'impulsions (FPT) est positionné dans un mode de communication de données selon un protocole de communication déterminé s'il reçoit un paquet de données (TR) selon ledit protocole de communication.

3. Unité d'acquisition de données (UNIT) selon l'une au moins des revendications précédentes, **caractérisée en ce que** l'unité de contrôle (UC1) est en outre apte à appliquer une temporisation (TH1) à la vérification du mode du fil de relais d'impulsions (FPT).

4. Unité d'acquisition de données (UNIT) selon la revendication précédente, **caractérisée en ce que** l'unité de contrôle (UC1) est en outre apte à envoyer une alarme de coupure si la temporisation (TH1) est écoulée et que le fil de relais d'impulsions (FPT) n'est pas positionné dans ledit mode de communication.

5. Unité d'acquisition de données (UNIT) selon l'une au moins des revendications précédentes, **caractérisée en ce qu'**elle comporte deux fils de relais d'impulsions électriques (FPT1, FPT2).

6. Unité d'acquisition de données selon l'une au moins des revendications précédentes, **caractérisée en ce qu'**elle est un capteur (CAPT) apte à compter des impulsions électriques.

7. Unité d'acquisition de données (UNIT) selon l'une au moins des revendications précédentes 1 à 5, **caractérisée en ce qu'**elle est un compteur (COMPT) apte à acquérir des données sous la forme d'une grandeur physique.

8. Dispositif de communication (DISP) apte à coopérer avec une unité d'acquisition de données (UNIT) selon l'une des revendications précédentes, l'unité (UNIT) comprenant :
- au moins un fil de relais d'impulsions (FPT) apte à être positionné dans un mode de communication de données, et
- un fil de détection de coupure (FC) auquel est associé un état, **caractérisé en ce qu'**il comporte une unité de contrôle (UC2) apte à :
- Modifier l'état du fil de détection de coupure (FC) ;
- Positionner le fil de relais d'impulsions (FPT) dans un mode de communication de données selon un protocole de communication déterminé ; et
- Echanger des données avec l'unité d'acquisition de données (UNIT) selon le protocole de communication via le fil de relais d'impulsions (FPT) lorsque ledit fil est positionné dans ledit mode de communication.

9. Dispositif de communication (DISP) selon la revendication précédente, **caractérisé en ce que** le positionnement du fil de relais d'impulsions (FPT) dans un mode de communication de données selon un protocole de communication déterminé est effectué en envoyant un paquet de données (TR) selon ledit protocole de communication.

10. Dispositif de communication (DISP) selon l'une au moins des revendications précédentes 8 ou 9, **caractérisé en ce qu'**il est un capteur (CAPT) apte à compter des impulsions électriques.

11. Dispositif de communication (DISP) selon l'une au moins des revendications précédentes 8 ou 9, **caractérisé en ce qu'**il est un compteur (COMPT) apte à acquérir des données sous la forme d'une grandeur physique.

## Patentansprüche

1. Datenerwerbseinheit (UNIT), die geeignet ist, mit einer Kommunikationsvorrichtung (DISP) zusammenzuwirken, wobei die Einheit umfasst:
wenigstens einen Relaisdraht elektrischer Impulse (FTP), der geeignet ist, in einem Datenkommunikationsmodus positioniert zu sein, und
- einen Abschaltertassungsdraht (FC), dem ein Zustand zugeordnet ist, **dadurch gekennzeichnet, dass** er eine Kontrolleinheit (UC1) umfasst, die geeignet ist:
- den Zustand des Abschalterfassungsdrahts (FC) zu kontrollieren;
- wenn der Abschalterfassungsdraht (FC) verändert wurde, zu überprüfen, ob der Relaisdraht der Impulse (FPT) in einem Datenkommunikationsmodus gemäß einem bestimmten Kommunikationsprotokoll positioniert ist; und
- Daten mit der Kommunikationsvorrichtung (DSP) gemäß dem Kommunikationsprotokoll über den Relaisdraht der Impulse (FPT) auszutauschen, wenn der genannte Draht in dem genannten Kommunikationsmodus positioniert ist.

2. Datenerwerbseinheit (UNIT) gemäß Anspruch 1, **dadurch gekennzeichnet, dass** der Relaisdraht der Impulse (FPT) in einem Datenkommunikationsmodus gemäß einem bestimmten Kommunikationsprotokoll positioniert ist, wenn er ein Datenpaket (TR) gemäß dem genannten Kommunikationsprotokoll empfängt.

3. Datenerwerbseinheit (UNIT) gemäß wenigstens einem der voranstehenden Ansprüche, **dadurch gekennzeichnet, dass** die Kontrolleinheit (UC1) darüber hinaus geeignet ist, eine Pufferung (TH1) zur Überprüfung des Modus des Relaisdrahtes der Impulse (FPT) anzuwenden.

4. Datenerwerbseinheit (UNIT) gemäß dem voranstehenden Anspruch, **dadurch gekennzeichnet, dass** die Kontrolleinheit (UC1) darüber hinaus geeignet ist, einen Abschaltalarm zu versenden, wenn die Pufferung (TH1) abgelaufen ist und der Relaisdraht der Impulse (FPT) nicht in dem genannten Kommunikationsmodus positioniert ist.

5. Datenerwerbseinheit (UNIT) gemäß wenigstens einem der voranstehenden Ansprüche, **dadurch gekennzeichnet, dass** sie zwei Relaisdrähte elektrischer Impulse (FPT1, FPT2) umfasst.

6. Datenerwerbseinheit gemäß wenigstens einem der voranstehenden Ansprüche, **dadurch gekennzeichnet, dass** sie ein Sensor (CAPT) ist, der geeignet ist, elektrische Impulse zu zählen.

7. Datenerwerbseinheit (UNIT) gemäß wenigstens einem der voranstehenden Ansprüche 1 bis 5, **dadurch gekennzeichnet, dass** sie ein Zähler (COMPT) ist, der geeignet ist, Daten in Form einer physikalischen Größe zu erwerben.

8. Kommunikationsvorrichtung (DISP), die geeignet ist, mit einer Datenerwerbseinheit (UNIT) gemäß einem der voranstehenden Ansprüche (UNIT) zusammenzuwirken, umfassend:
- wenigstens einen Relaisdraht der Impulse (FPT), der geeignet ist, in einem Datenkommunikationsmodus positioniert zu sein, und
- einen Abschalterfassungsdraht (FC), der ein Zustand zugeordnet ist, **dadurch gekennzeichnet, dass** er eine Kontrolleinheit (UC2) umfasst, die geeignet ist:
- den Zustand des Abschalterfassungsdrahts (FC) zu ändern;
- den Relaisdraht der Impulse (FPT) in einem Datenkommunikationsmodus gemäß einem bestimmten Kommunikationsprotokoll zu positionieren; und
- Daten mit der Datenerwerbseinheit (UNIT) gemäß dem Kommunikationsprotokoll über den Relaisdraht der Impulse (FT) auszutauschen, wenn der genannte Draht in dem genannten Kommunikationsmodus positioniert ist.

9. Kommunikationsvorrichtung (DISP) gemäß dem voranstehenden Anspruch, **dadurch gekennzeichnet, dass** die Positionierung des Relaisdrahtes der Impulse (FPT) in einem Datenkommunikationsmodus gemäß einem bestimmten Kommunikationsprotokoll durch den Versand eines Datenpakets (TR) gemäß dem genannten Kommunikationsprotokoll durchgeführt wird.

10. Kommunikationsvorrichtung (DISP) gemäß wenigstens einem der voranstehenden Ansprüche 8 oder 9, **dadurch gekennzeichnet, dass** sie ein Sensor (CAPT) ist, der geeignet ist, elektrische Impulse zu zählen.

11. Kommunikationsvorrichtung (DISP) gemäß wenigstens einem der voranstehenden Ansprüche 8 oder 9, **dadurch gekennzeichnet, dass** sie ein Zähler (COMPT) ist, der geeignet ist, Daten in Form einer physikalischen Größe zu erwerben.

## Claims

1. A data acquisition unit (UNIT) able to cooperate with a communication device (DISP), the unit comprising:
- at least one electrical pulse relay wire (FPT) able to be positioned in a data communication mode, and
- a cut-off detection wire (FC) with which a state is associated,
**characterised in that** it includes a control unit (UC1) able to:
- control the state of the cut-off detection wire (FC),
- if the state of the cut-off detection wire (FC) has been modified, check whether the pulse relay wire (FPT) is positioned in a data communication mode according to a determined communication protocol; and
- exchange data with the communication device (DSP) according to the communication protocol via the pulse relay wire (FPT) when said wire is positioned in said communication mode.

2. The data acquisition unit (UNIT) according to claim 1, **characterised in that** the pulse relay wire (FPT) is positioned in a data communication mode according to a determined communication protocol if it receives a data packet (TR) according to said communication protocol.

3. The data acquisition unit (UNIT) according to at least one of the preceding claims, **characterised in that** the control unit (UC1) is further able to apply a timing (TH1) upon checking the mode of the pulse relay wire (FPT).

4. The data acquisition unit (UNIT) according to the preceding claim, **characterised in that** the control unit (UC1) is further able to send a cut-off alarm if the timing (TH1) has lapsed and the pulse relay wire (FPT) is not positioned in said communication mode.

5. The data acquisition unit (UNIT) according to at least one of the preceding claims, **characterised in that** it includes two electrical pulse relay wires (FPT1, FPT2).

6. The data acquisition unit (UNIT) according to at least one of the preceding claims, **characterised in that** it is a sensor (CAPT) able to count electrical pulses.

7. The data acquisition unit (UNIT) according to at least one of the preceding claims 1 to 5, **characterised in that** it is a counter (COMPT) able to acquire data as a physical magnitude.

8. A communication device (DISP) able to cooperate with a data acquisition unit (UNIT) according to one of the preceding claims, the unit (UNIT) comprising:
- at least one pulse relay wire (FPT) able to be positioned in a data communication mode, and
- a cut-off detection wire (FC) with which a state is associated,
**characterised in that** it includes a control unit (UC2) able to:
- modify the state of the cut-off detection wire (FC);
- position the pulse relay wire (FPT) in a data communication mode according to a determined communication protocol; and
- exchange data with the data acquisition unit (UNIT) according to the communication protocol via the pulse relay wire (FPT) when said wire is positioned in said communication mode.

9. The communication device (DISP) according to the preceding claim, **characterised in that** positioning the pulse relay wire (FPT) in a data communication mode according to a determined communication protocol is made by sending a data packet (TR) according to said communication protocol.

10. The communication device (DISP) according to at least one of the preceding claims 8 or 9, **characterised in that** it is a sensor (CAPT) able to count electrical pulses.

11. The communication device (DISP) according to at least one of the preceding claims 8 or 9, **characterised in that** it is a counter (COMPT) able to acquire data as a physical magnitude.
